# EUROPEAN PATENT APPLICATION

(11) **EP 3 332 634 A1**
(43) Date of publication of application: **13.06.2018**
(21) Application number: 17205419.9
(22) Date of filing: 05.12.2017
(51) Int. Cl.: A01J 5/04, A01J 9/04, A01J 7/02

(54) **COUPLING DEVICE FOR COUPLING TOGETHER MILK DISCHARGE CONDUITS OF MILKING ROBOTS, AND A SYSTEM FOR COUPLING A PLURALITY OF MILKING ROBOTS TO ONE OR MORE MILK COOLING TANKS USING THE COUPLING DEVICE**

(30) Priority: 06.12.2016 NL 2017934
(71) Applicant: Mueller B.V., 7131 PA Lichtenvoorde (NL)
(72) Inventor: VINK, Bram, 7131 PA Lichtenvoorde (NL)
(74) Representative: Mink-Lindenburg, Charlotte Hildegard

(57) **Abstract**

The invention relates to a coupling device (1) for coupling together milk discharge conduits (10) of milking robots which avoids a milk cooling tank having to be provided with additional connections after installation, whereby the milk cooling tank remains in the original state and a situation is avoided where a milk cooling tank cannot be utilized to receive milk.

The invention also relates to a system (100, 200) for coupling a plurality of milking robots to one or more milk cooling tanks (12-1, 12-2).

## Description

The invention relates to a coupling device for coupling together milk discharge conduits of milking robots.

A milk cooling tank is equipped in the factory with a fixed number of feed connections for connecting milk discharge conduits of milking robots. If due to an increase in the number of milking robots the number of connections is not sufficient, the milk cooling tank is provided on site (in or close to the animal accommodation) with additional connections. This situation is undesirable because the milk cooling tank cannot be utilized in the interim to receive milk, and there is often no space on the milk cooling tank to add an additional connection. Four or five milking robots are in practice generally connected to one tank.

The present invention has for its object to provide a coupling device for coupling together milk discharge conduits of milking robots which avoids a milk cooling tank having to be provided with additional connections after installation, whereby the milk cooling tank remains in the original state and a situation is avoided where a milk cooling tank cannot be utilized to receive milk.

The coupling device according to the invention has for this purpose the feature that the coupling device comprises a collecting chamber, which coupling device is provided with a plurality of closable milk feed connections which are each configured for connection of a milk discharge conduit of a milking robot, which milk feed connection is in fluid connection with the collecting chamber and a milk discharge connection for discharging liquids from the collecting chamber and the coupling device.

The milk discharge connection of the inventive coupling device is intended for direct or indirect coupling to the milk feed connection of a milk cooling tank. The effect of the technical measures of the inventive coupling device is that a plurality of milking robots can be connected to the milk cooling tank by means of the coupling device without additional connections having to be arranged on the milk cooling tank. It will be evident that each milk feed connection of the coupling device is provided with an inlet and an outlet, which inlet and outlet are in fluid connection.

Each milk feed connection preferably comprises a remotely controllable, preferably pneumatic valve for controllable closing or bringing about the fluid connection between the inlet and outlet of the milk feed connection. The valve can be operated manually or can be operated by a control device.

In a preferred embodiment of the inventive coupling device the coupling device also comprises a flushing connection for connection of a flushing device. It is possible by means of the flushing connection to clean the coupling device, and particularly the collecting chamber, by means of the flushing device. The flushing connection preferably comprises a sterile, remotely controllable, preferably pneumatic non-return valve, thereby preventing milk from the milking robots flowing to the flushing device.

In the preferred embodiment of the inventive coupling device the milk feed connections are preferably arranged directly on the collecting chamber.

In the preferred embodiment of the inventive coupling device the milk discharge connection is also preferably arranged directly on the collecting chamber.

The collecting chamber is preferably elongate, and more particularly tubular.

The milk feed connections are preferably arranged on the collecting chamber at an angle of 30 to 60 degrees relative to the longitudinal side of the collecting chamber, whereby milk can flow into the collecting chamber without much turbulence.

In a practical development of the preferred embodiment of the inventive coupling device the collecting chamber is assembled from a plurality of segments to be coupled in series to each other, wherein each segment comprises at least one milk feed connection, wherein the first segment forms the milk discharge connection and the final segment forms the flushing connection. Each segment is preferably formed substantially by a tubular chamber part. The segments are preferably provided at a first and second outer end with a ferrule fitting, and can be coupled to each other by means of a clamp. The chamber parts together form the collecting chamber of the coupling device.

The invention also relates to a system for coupling a plurality of milking robots to one or more milk cooling tanks.

The inventive system comprises for this purpose the inventive coupling device and at least two controllable three-way valves, wherein each three-way valve comprises an inlet, first and second outlets and is configured to bring about a fluid connection between the inlet and one of the outlets, and to block the fluid connection between the inlet and the outlets, wherein the first outlet of each three-way valve is configured for connection to one of the milk cooling tanks. A three-way valve is also understood to mean any configuration or assembly of closing valves and conduits having the same function as a three-way valve. Using the inventive system it is possible to couple a plurality of cooling tanks to a plurality of milking robots via one coupling device, wherein it is also possible by controlling the three-way valves to select the milk cooling tank to which the milk supplied to the coupling device has to be transported. This makes it possible to transport different types of milk in selective manner to different milk cooling tanks. Morning milk can for instance be stored separately of evening milk in simple manner using the inventive system.

The inventive system preferably further comprises a controllable flushing device provided with a flushing container with flushing liquid, wherein the flushing device has a flushing outlet with which flushing liquid is dischargeable from the flushing container, and at least one flushing return inlet with which flushing liquid can be returned to the flushing container. The flushing outlet is connected for this purpose to the flushing connection of the coupling device in order to flush the coupling device. The coupling device, the three-way valves and further fluid connections in the system can be flushed through with flushing water using the flushing device, thereby enhancing hygiene within the inventive system.

In a first preferred embodiment of the inventive system the three-way valves are connected in series to each other, wherein the second outlet of a three-way valve, except for the final one in the series, is in fluid connection with the inlet of a subsequent three-way valve, the second outlet of the final three-way valve is in fluid connection with a first flushing return inlet of the flushing device, the inlet of the first three-way valve is in fluid connection with the milk discharge connection of the coupling device, the flushing connection of the coupling device is in fluid connection with the flushing outlet of the flushing device. Together with the flushing device these fluid connections form a ring conduit.

In the first preferred embodiment of the inventive system the fluid connection between the second outlet of a three-way valve and the inlet of a subsequent three-way valve and the fluid connection between the second outlet of the final three-wave valve and the flushing return inlet are preferably provided with drain valves. It is possible using the drain valves to flush one or more parts of the fluid connections in the inventive system and to discharge the used flushing water.

In a second preferred embodiment of the inventive system the milk discharge connection of the coupling device is in fluid connection with the inlet of a multi-way valve comprising an inlet and a plurality of outlets, which multi-way valve is configured to bring about a fluid connection between the inlet and one of the outlets and to block the fluid connection between the inlet and the outlets. Each of the outlets of the multi-way valve is moreover in fluid connection with the inlet of one of the three-way valves, the second outlet of each three-way valve is in fluid connection with one of the flushing return inlets of the flushing device and the flushing outlet of the flushing device is in fluid connection with the flushing connection of the coupling device.

The fluid connection between the second outlet of each three-way valve and one of the flushing return inlets of the flushing device is preferably provided with a drain valve. It is possible using this drain valve to discharge the used flushing water.

The first preferred embodiment of the inventive system according to the invention is preferably provided with a first control device configured to place the system in a plurality of operating positions,
wherein in a first operating position:
- the flushing device is switched off;
- one or more milk feed connections of the coupling device are opened;
- the flushing connection of the coupling device is closed;
- the drain valves are closed;
- one of the three-way valves is actuated such that a fluid connection is brought about between the inlet and the first outlet of the respective three-way valve;
- the other three-way valves are actuated such that the fluid connection between the inlet and the outlets of these other three-way valves is blocked;
wherein in a second operating position:
- the flushing device is switched on;
- the flushing connection of the coupling device is opened;
- the milk feed connections of the coupling device are closed;
- a successive series of three-way valves is actuated such that a fluid connection is brought about between the inlet and the second inlet of this series of three-way valves;
- the three-way valve following said series of three-way valves is actuated such that the fluid connection between the inlet and the second inlet is blocked;
- all drain valves are closed except the drain valve following the three-way valve following said series of three-way valves;
wherein in a third operating position:
- the flushing device is switched on;
- the flushing connection of the coupling device is opened;
- the milk feed connections of the coupling device are closed;
- the three-way valves are actuated such that a fluid connection is brought about between the inlet and the second inlet;
- the drain valves are closed.

The second preferred embodiment of the inventive system according to the invention is preferably provided with a second control device configured to place the system in a plurality of operating positions, wherein in each operating position the multi-way valve is actuated such that a fluid connection is brought about between the inlet and one of the outlets of the multi-way valve,
wherein in a first operating position:
- the flushing device is switched off;
- one or more milk feed connections of the coupling device are opened;
- the flushing connection of the coupling device is closed;
- the drain valves are closed;
- the three-way valve in which the inlet is in fluid connection with the one outlet of the multi-way valve is actuated such that a fluid connection is brought about between the inlet and the first outlet of the respective three-way valve;
wherein in a second operating position:
- the flushing device is switched on;
- the flushing connection of the coupling device is opened;
- the milk feed connections of the coupling device are closed;
- the three-way valve in which the inlet is in fluid connection with the one outlet of the multi-way valve is actuated such that a fluid connection is brought about between the inlet and the second outlet of the respective three-way valve;
- the drain valve in the fluid connection between the second outlet of the respective three-way valve and one of the flushing inlets of the flushing device is opened;
wherein in a third operating position:
- the flushing device is switched on;
- the flushing connection of the coupling device is opened;
- the milk feed connections of the coupling device are closed;
- the three-way valves are closed;
- the three-way valve in which the inlet is in fluid connection with the one outlet of the multi-way valve is actuated such that a fluid connection is brought about between the inlet and the second outlet of the respective three-way valve;
- the drain valve in the fluid connection between the second outlet of the respective three-way valve and one of the flushing inlets of the flushing device is closed.

The invention will be further elucidated with reference to the following figure, in which:
Figure 1 shows a preferred embodiment of the coupling device according to the invention;
Figure 2 shows a first embodiment of the system according to the invention;
Figure 3 shows the first operating position of the first embodiment of the system according to the invention;
Figure 4 also shows the first operating position of the first embodiment of the system according to the invention;
Figure 5 shows the second operating position of the first embodiment of the system according to the invention;
Figure 6 shows the second operating position of the first embodiment of the system according to the invention;
Figure 7 shows the third operating position of the first embodiment of the system according to the invention;
Figure 8 shows a second embodiment of the system according to the invention;
Figure 9 shows the first operating position of the second embodiment of the system according to the invention;
Figure 10 shows the first operating position of the second embodiment of the system according to the invention;
Figure 11 shows the second operating position of the second embodiment of the system according to the invention;
Figure 12 also shows the second operating position of the second embodiment of the system according to the invention;
Figure 13 shows the third operating position of the second embodiment of the system according to the invention;
Figure 14 also shows the third operating position of the second embodiment of the system according to the invention.

The same components are designated in the different figures with the same reference numerals.

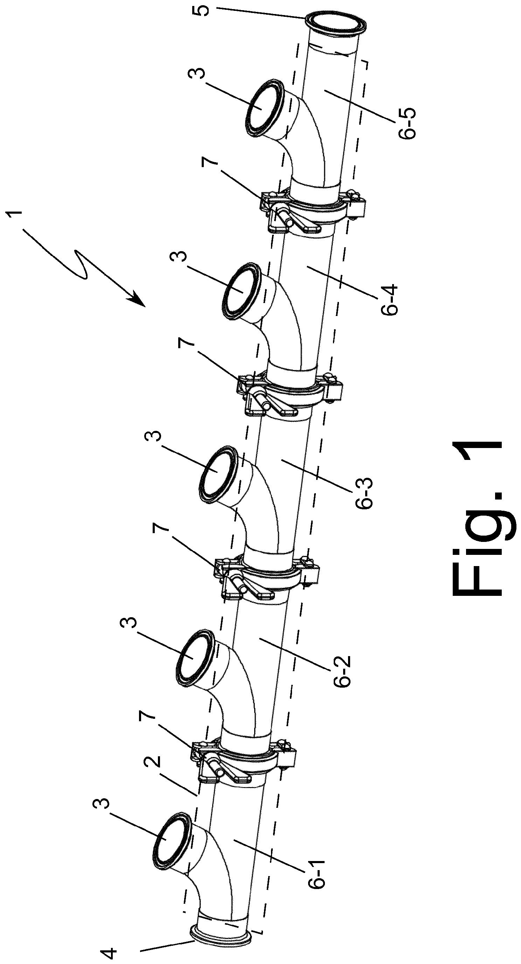

Figure 1 shows a preferred embodiment of coupling device 1 according to the invention. Coupling device 1 is configured to couple milk discharge conduits 10 of milking robots, which milking robots are however not shown in the figure. Coupling device 1 comprises an elongate tubular collecting chamber 2 for collecting milk coming from the milking robots. The boundaries of collecting chamber 2 are indicated using broken lines. Coupling device 1 is provided with a plurality of milk feed connections 3 which are arranged on collecting chamber 2. Each milk feed connection 3 is configured for connection of a milk discharge conduit of a milking robot. Milk feed connection 3 can be provided with a remotely controllable, preferably pneumatic valve 11. Each milk feed connection 3 is in fluid connection with collecting chamber 2. Coupling device 1 also comprises a milk discharge connection 4 for discharging liquids from collecting chamber 2, and so from coupling device 1. Milk discharge connection 4 is arranged at a first outer end of collecting chamber 2. Milk feed connections 3 preferably lie at an angle of 30 to 60 degrees relative to the longitudinal side of collecting chamber 2 so that milk flows in the direction of milk discharge connection 4 into collecting chamber 2. Coupling device 1 also comprises a flushing connection 5 at the second outer end of collecting chamber 2 for the connection of a flushing device.

Collecting chamber 2 is assembled from a plurality of segments 6-1,..,6-5 to be coupled to each other in series. Shown in the figure by way of example is a collecting chamber 2 with five segments. The invention is expressly not limited to five segments. Each segment 6-1,..,6-5 comprises at least one milk feed connection 3. First segment 6-1 forms the first outer end of collecting chamber 2 in which milk discharge connection 4 is arranged. The final segment 6-5 forms the second outer end of collecting chamber 2 in which flushing connection 5 is arranged. Segments 6-1,..,6-5 are coupled to each other using ferrule fittings, in the same way as flushing connection 5 and milk discharge connection 4, and using clamps 7. Coupling device 1 can be extended in longitudinal direction by adding further segments, or shortened by removing segments.

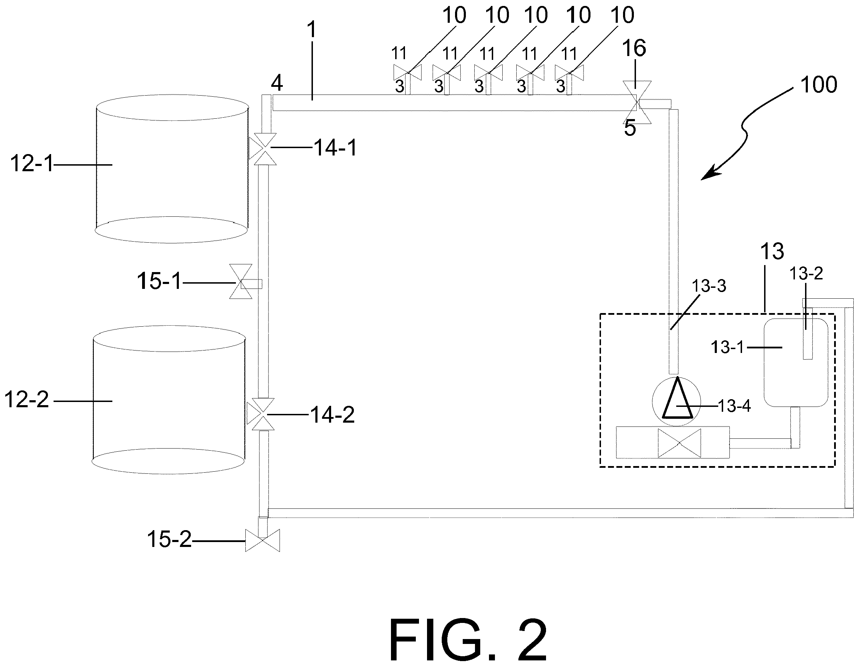

Figure 2 shows a first embodiment of system 100 according to the invention for coupling a plurality of milking robots to one or more milk cooling tanks. System 100 will be elucidated on the basis of two milk cooling tanks 12-1;12-2. System 100 can however be equipped with a large number of milk cooling tanks. System 100 comprises firstly a coupling device 1 according to the invention. In addition, system 100 comprises two controllable three-way valves 14-1;14-2 which are actuated by means of the control according to the invention. Each three-way valve comprises an inlet, first and second outlet and is configured to bring about a fluid connection between the inlet and one of the outlets and to block the fluid connection between the inlet and the outlets. The first outlet of each three-way valve 14-1;14-2 is configured for connection to one of the milk cooling tanks 12-1;12-2. Milk feed connections 3 are provided with controllable valves 11. Valves 11 are preferably actuated by the system according to the invention. The milking robots can also be provided with valves in order to block the milk supply to each feed connection. The control of the system according to the invention must in that case ensure that, when valves 11 open, the valves of the robots also open.

System 100 further comprises a controllable flushing device 13. This is provided with a flushing container 13-1 with flushing liquid. Flushing device 13 has a flushing outlet 13-3 with which flushing liquid can be drained from flushing container 13-1 by means of pump 13-4. In addition, flushing device 13 has a flushing return inlet 13-2 with which flushing liquid can be returned to flushing container 13-1. Flushing outlet 13-3 is connected to flushing connection 5 of coupling device 1. Coupling device 1 can be flushed with flushing device 13. Flushing connection 5 has a sterile remotely controllable, pneumatic non-return valve 16-1. Also present on the suction side of circulation pump 13-4 is a drain valve. This drain valve is located between circulation pump 13-4 and flushing container 13-1. All flushing liquid present above this drain valve is discharged with this valve.

Milk discharge connection 4 of coupling device 1 is in fluid connection with the inlet of three-way valve 14-1. Second outlet of three-way valve 14-1 is in fluid connection with the inlet of second three-way valve 14-2. The second outlet of three-way valve 14-2 is in fluid connection with flushing return inlet 13-2 of flushing device 13. The fluid connection between the second outlet of three-way valve 14-1 and the inlet of three-way valve 14-2 is provided with a drain valve 15-1 for emptying the fluid connection. The fluid connection between the second outlet of three-way valve 14-2 and flushing return inlet 13-2 is also provided with a drain valve 15-2 for emptying the fluid connection. Drain valves 15-1;15-2 are preferably positioned at a lowest point in system 100 so that liquids in system 100 can leave drain valves 15-1;15-2 by means of gravitational force.

The system is provided with a first control device configured to place the system in a plurality of operating positions. The first control device is not shown. The first control device comprises an electrical circuit for actuating flushing device 13, three-way valves 14-1;14-2 and drain valves 15-1;15-2. The first control device has a number of operating positions which are discussed in the following figures.

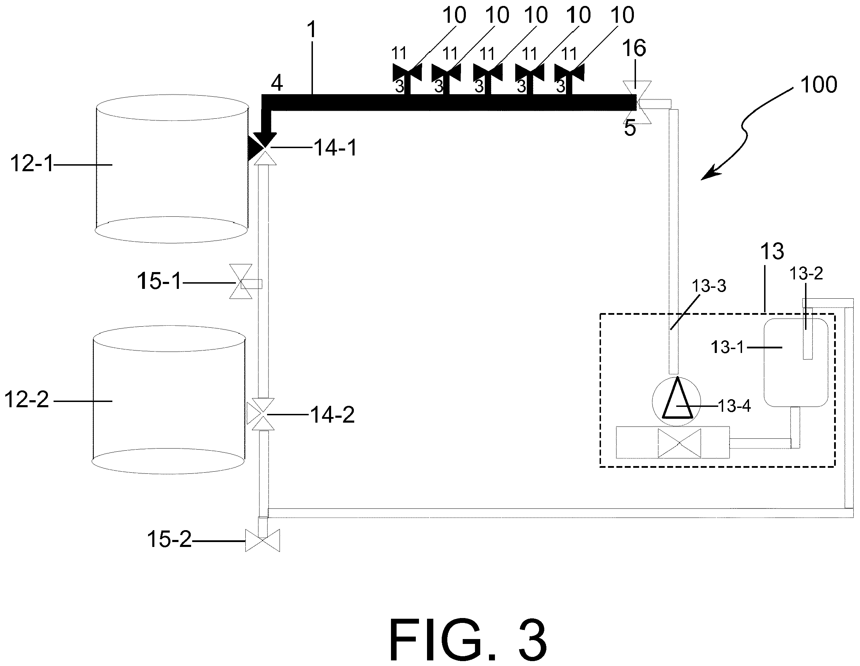

Figure 3 shows the first operating position of system 100 according to the invention, in which milk is guided from the milking robots to first milk cooling tank 12-1. For this purpose:
- flushing device 13 is switched off;
- one or more milk feed connections 3 of coupling device 1 are opened;
- flushing connection 16-1 of the coupling device is closed;
- drain valves 15-1;15-2 are closed;
- three-way valve 14-1 is actuated such that a fluid connection is brought about between the inlet and the first outlet of three-way valve 14-1;
- three-way valve 14-2 is actuated such that the fluid connection between the inlet and the outlets is blocked.

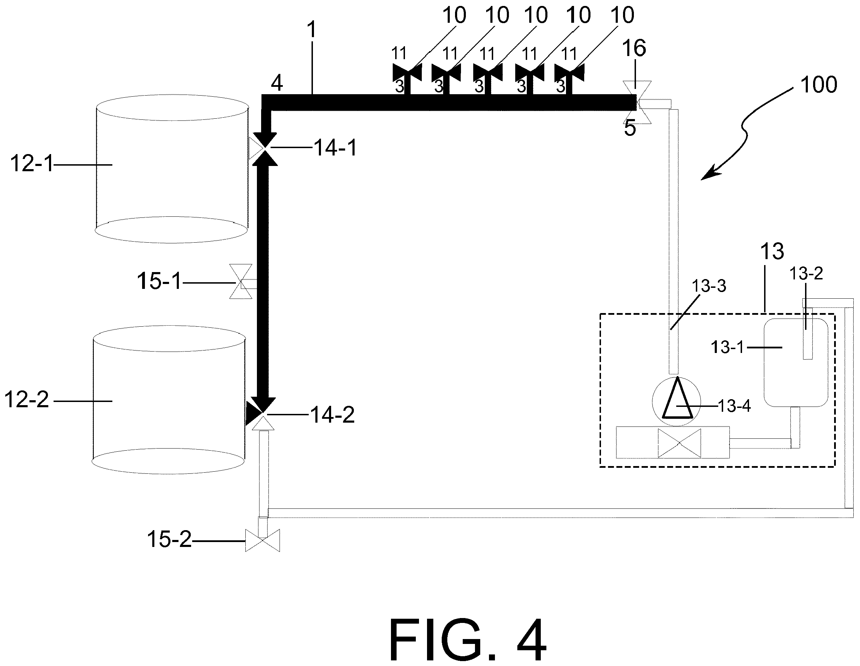

Figure 4 also shows the first operating position in which milk is guided from the milking robots to second milk cooling tank 12-1. Three-way valve 14-1 is for this purpose actuated such that a fluid connection is brought about between the inlet and the second outlet of three-way valve 14-1;
- three-way valve 14-2 is actuated such that the fluid connection is brought about between the inlet and the first outlet of three-way valve 14-2.

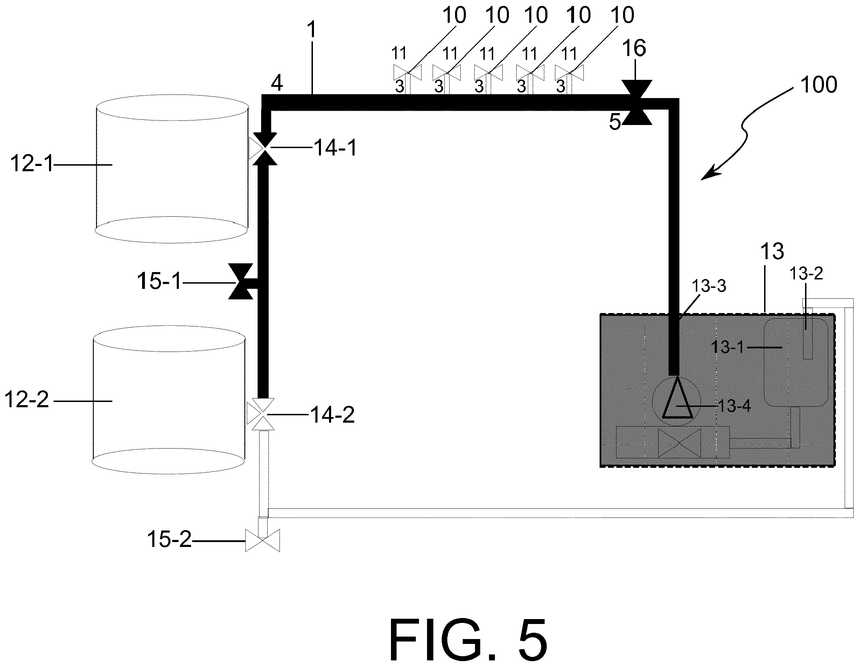

Figure 5 shows the second operating position of system 100 according to the invention in which the milk supply is closed and the fluid connections are flushed up to the inlet of three-way valve 14-2. For this purpose:
- flushing device 13 is switched on;
- flushing connection 16-1 of the coupling device is opened;
- milk feed connections 3 of coupling device 1 are closed;
- three-way valve 14-1 is actuated such that a fluid connection is brought about between the inlet and the second inlet;
- three-way valve 14-2 is actuated such that the fluid connection between the inlet and the second inlet is blocked;
- drain valve 15-2 is closed;
- drain valve 15-1 is opened.
In the case additional flushing liquid is pressed beyond valve 14-2 during flushing, drain valve 15-2 can then still be opened in order to discharge this additional flushing liquid. Drain valve 15-1 can also be opened some time after flushing device 13 has been switched on.

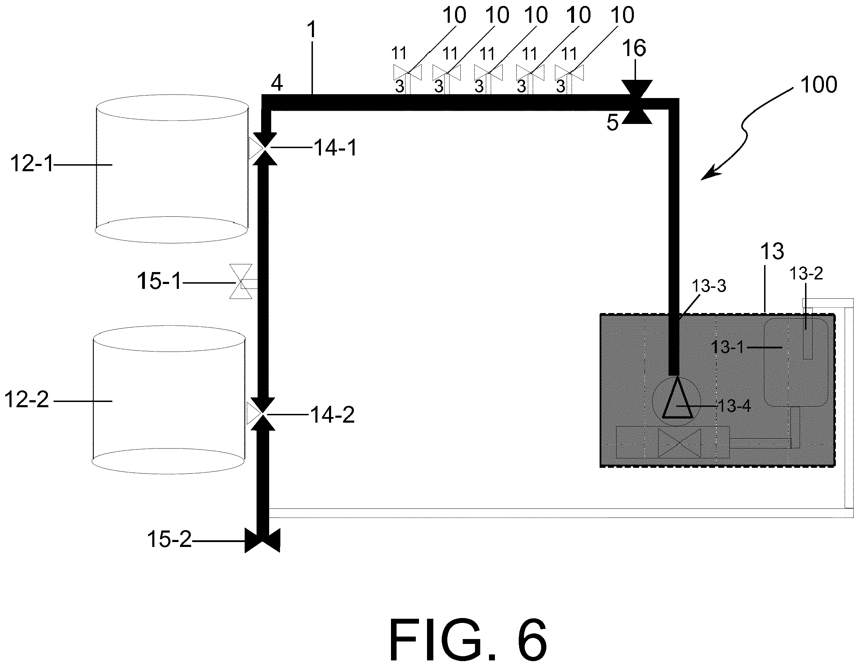

Figure 6 shows the second operating position of system 100 according to the invention in which the milk supply is closed and the fluid connections are flushed up to the inlet of drain valve 15-2. For this purpose:
- flushing device 13 is switched on;
- flushing connection 16-1 of the coupling device is opened;
- milk feed connections 3 of coupling device 1 are closed;
- three-way valve 14-1 is actuated such that a fluid connection is brought about between the inlet and the second inlet;
- three-way valve 14-2 is actuated such that a fluid connection is brought about between the inlet and the second inlet;
- drain valve 15-1 is closed;
- drain valve 15-2 is opened.
Drain valve 15-2 can also be opened some time after flushing device 13 has been switched on.

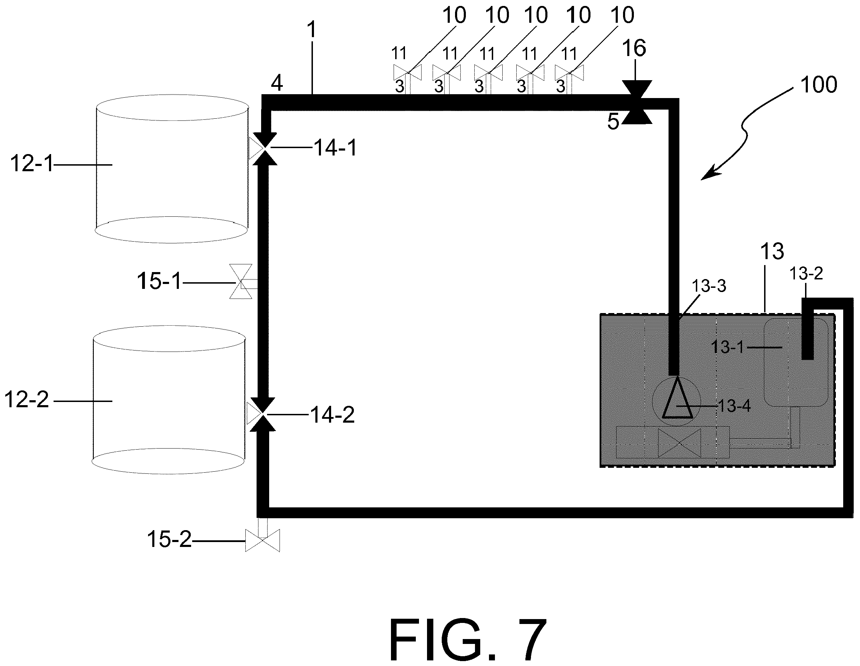

Figure 7 shows the third operating position of system 100 according to the invention in which the milk supply is closed and a circulation of flushing liquid takes place. For this purpose:
- flushing device 13 is switched on;
- flushing connection 5 of the coupling device is opened;
- milk feed connections 3 of coupling device 1 are closed by closing the valves 11;
- three-way valves 14-1;14-2 are actuated such that a fluid connection is brought about between the inlet and the second inlet;
- the drain valves are closed.

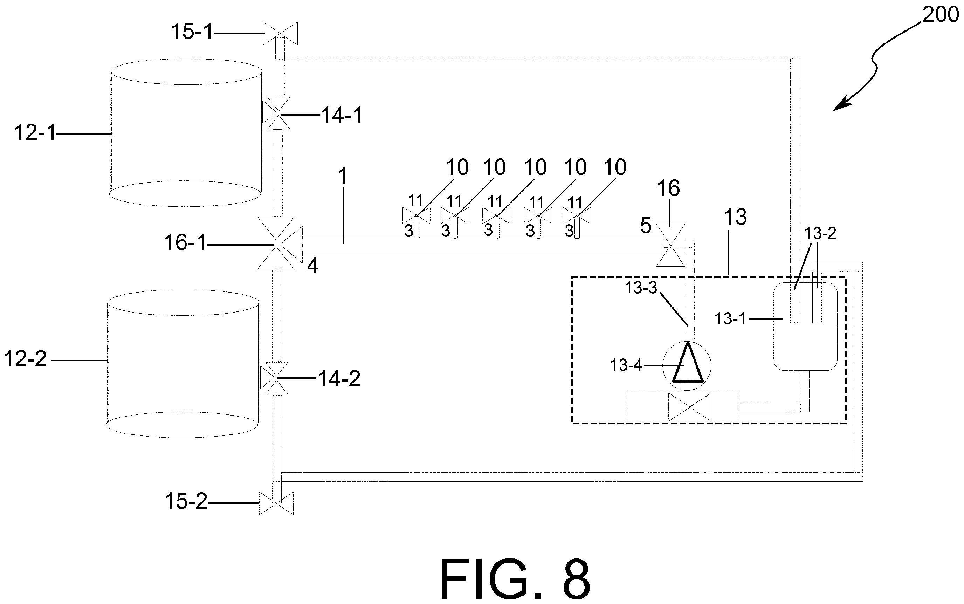

Figure 8 shows a second embodiment of system 200 according to the invention for coupling a plurality of milking robots to one or more milk cooling tanks. System 200 will be elucidated on the basis of two milk cooling tanks 12-1;12-2. System 200 can however be equipped with a large number of milk cooling tanks. System 200 comprises firstly a coupling device 1 according to the invention. Milk discharge connection 4 of coupling device 1 is in fluid connection with the inlet of a multi-way valve 16-1. Multi-way valve 16-1 comprises an inlet and a plurality of outlets. Multi-way valve 16-1 is configured to bring about a fluid connection between the inlet and one of the outlets and to block the fluid connection between the inlet and the outlets. The first outlet of multi-way valve 16-1 is in fluid connection with the inlet of three-way valve 14-1. The second outlet of multi-way valve 16-1 is in fluid connection with the inlet of three-way valve 14-2. The second outlet of three-way valve 14-1 is in fluid connection with one of the flushing return inlets 13-2 of flushing device 13. The second outlet of three-way valve 14-2 is in fluid connection with the other flushing return inlet 13-2 of flushing device 13.

Flushing outlet 13-3 of flushing device 13 is in fluid connection with flushing connection 5 of coupling device 1. The fluid connection between the second outlet of each three-way valve 14-1;14-2 and one of the flushing return inlets 13-2 of flushing device 13 is provided with a drain valve 15-1;15-2.

System 200 is provided with a second control device configured to place system 200 in a plurality of operating positions. The second control device is not shown. The second control device comprises an electrical circuit for actuating flushing device 13, multi-way valve 16-1, three-way valves 14-1;14-2 and drain valves 15-1;15-2. The second control device has a number of operating positions which are discussed in the following figures.

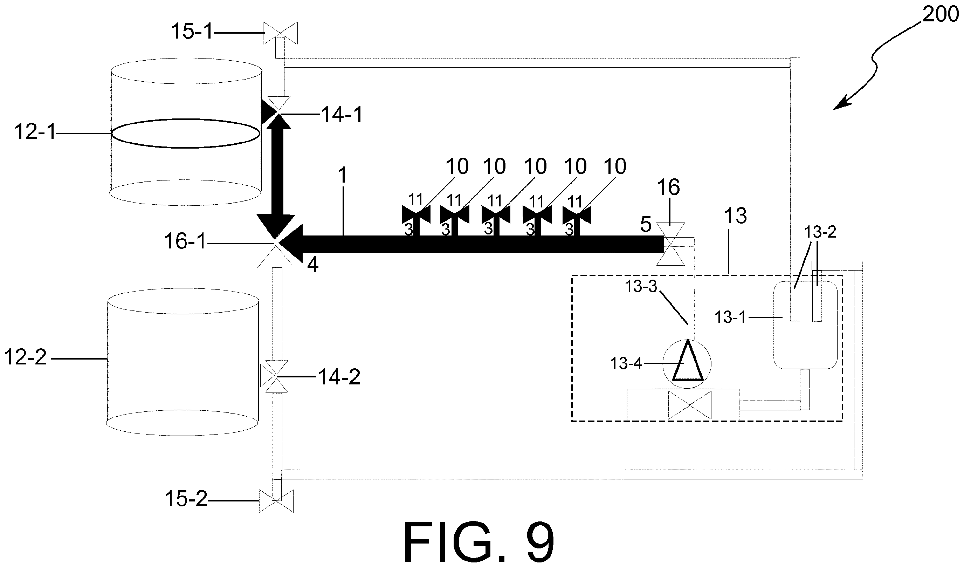

Figure 9 shows the first operating position of system 200 according to the invention in which milk from milking robots is guided to first milk cooling tank 12-1. For this purpose:
- flushing device 13 is switched off;
- one or more milk feed connections 3 of coupling device 1 are opened;
- flushing connection 5 of coupling device 1 is closed;
- drain valves 15-1;15-2 are closed;
- multi-way valve 16-1 is actuated such that a fluid connection is brought about between the inlet of multi-way valve 16-1 and the inlet of three-way valve 14-1;
- three-way valve 14-1 is actuated such that a fluid connection is brought about between the inlet of three-way valve 14-1 and the first outlet of three-way valve 14-1.

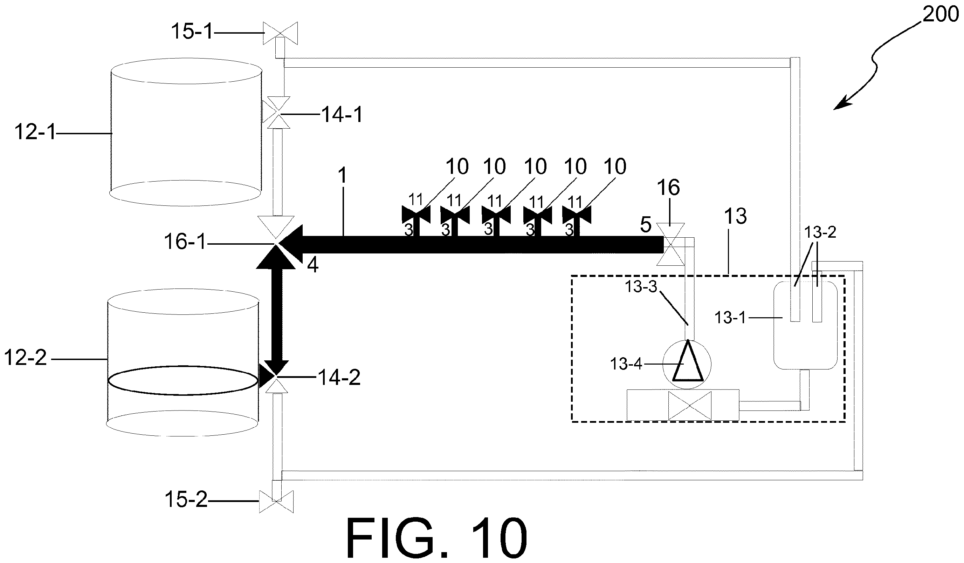

Figure 10 shows the first operating position of system 200 according to the invention in which milk from milking robots is guided to second milk cooling tank 12-2. For this purpose:
- flushing device 13 is switched off;
- one or more milk feed connections 3 of coupling device 1 are opened;
- flushing connection 5 of coupling device 1 is closed;
- drain valves 15-1;15-2 are closed;
- multi-way valve 16-1 is actuated such that a fluid connection is brought about between the inlet of multi-way valve 16-1 and the inlet of three-way valve 14-2;
- three-way valve 14-2 is actuated such that a fluid connection is brought about between the inlet of three-way valve 14-2 and the first outlet of three-way valve 14-2.

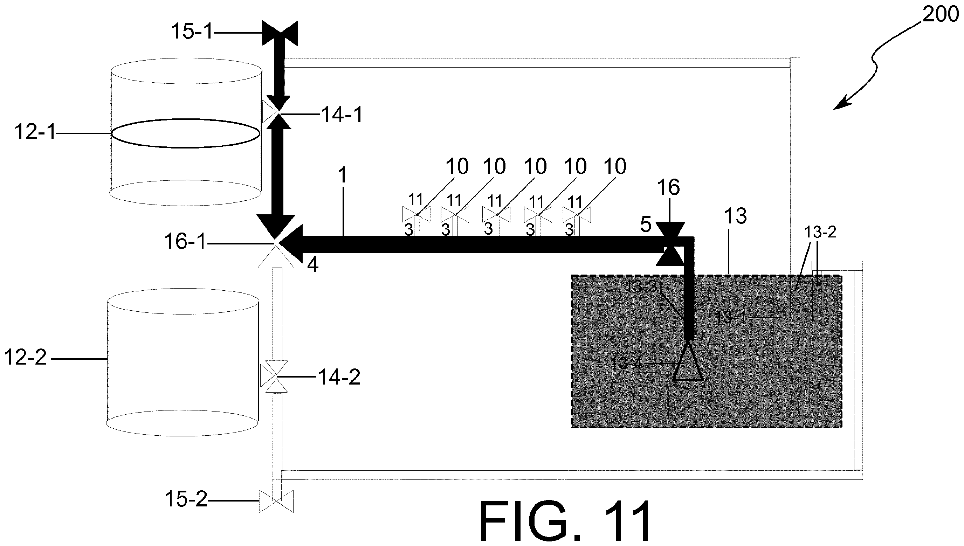

Figure 11 shows the second operating position of system 200 according to the invention in which the milk supply is closed and the fluid connections are flushed in the direction of first milk cooling tank 12-1 up to the inlet of three-way valve 15-1. For this purpose in the second operating position:
- flushing device 13 is switched on;
- flushing connection 5 of the coupling device is opened;
- milk feed connections 3 of coupling device 1 are closed;
- multi-way valve 16-1 is actuated such that a fluid connection is brought about between the inlet of multi-way valve 16-1 and the inlet of three-way valve 14-1;
- drain valve 15-1 is opened.

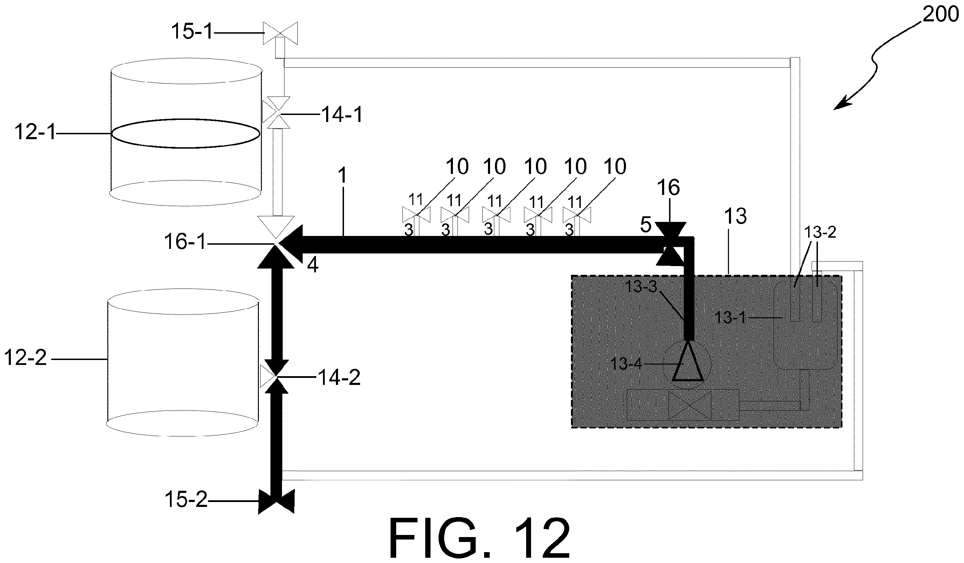

Figure 12 also shows the second operating position of system 200 according to the invention in which the milk supply is closed and the fluid connections are flushed in the direction of second milk cooling tank 12-2 up to the inlet of three-way valve 15-2. For this purpose in the second operating position:
- flushing device 13 is switched on;
- flushing connection 5 of the coupling device is opened;
- milk feed connections 3 of coupling device 1 are closed;
- multi-way valve 16-1 is actuated such that a fluid connection is brought about between the inlet of multi-way valve 16-1 and the inlet of three-way valve 14-2;
- drain valve 15-2 is opened.

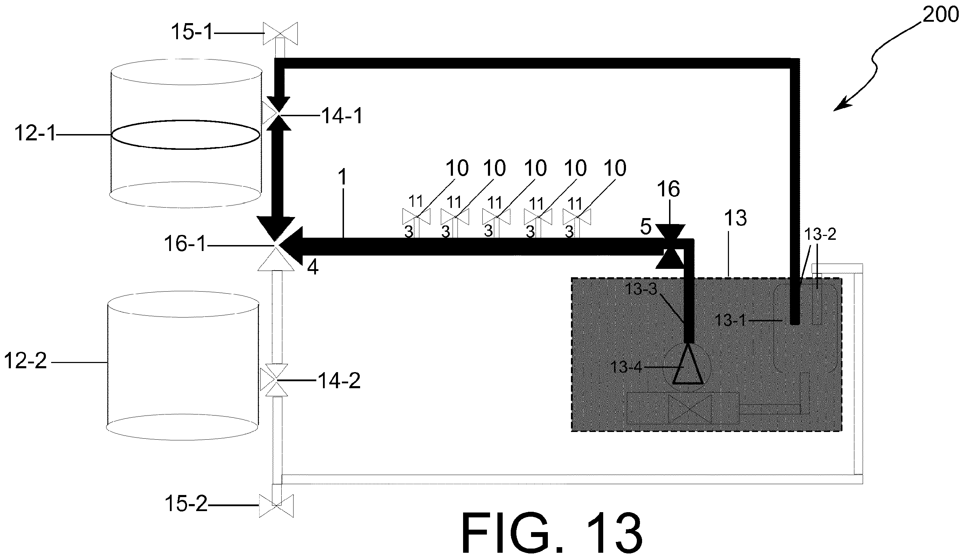

Figure 13 shows the third operating position of system 200 according to the invention in which the milk supply is closed and a circulation of flushing liquid takes place. For this purpose:
- flushing device 13 is switched on;
- flushing connection 5 of coupling device 1 is opened;
- milk feed connections 3 of coupling device 1 are closed;
- multi-way valve 16-1 is actuated such that a fluid connection is brought about between the inlet of multi-way valve 16-1 and the inlet of three-way valve 14-1;
- drain valve 15-1 is closed.

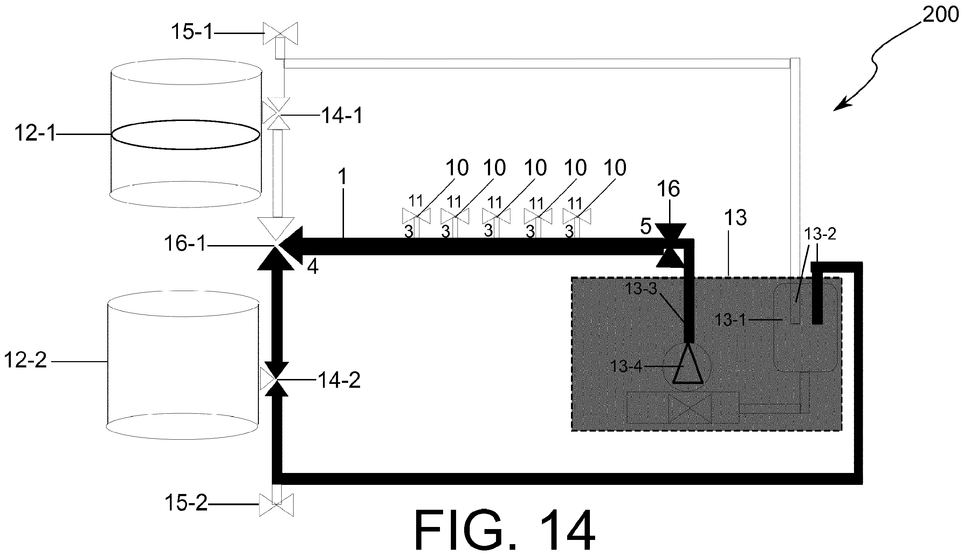

Figure 14 also shows the third operating position of system 200 according to the invention in which the milk supply is closed and a circulation of flushing liquid takes place. For this purpose:
- flushing device 13 is switched on;
- flushing connection 5 of coupling device 1 is opened;
- milk feed connections 3 of coupling device 1 are closed;
- multi-way valve 16-1 is actuated such that a fluid connection is brought about between the inlet of multi-way valve 16-1 and the inlet of three-way valve 14-2;
- drain valve 15-2 is closed.

All pneumatically controlled elements of the invention can in principle be replaced by electrically controlled variants thereof.

The drain valves in the system according to the invention also have the purpose of aerating or venting the system.

Finally, the invention is expressly not limited to the described and shown embodiments, but also expressly comprises all possible combinations thereof. The invention therefore extends generally to any embodiment falling within the scope of the appended claims, as seen in the light of the foregoing description and figures.

## Claims

1. Coupling device for coupling together milk discharge conduits of milking robots, comprising a collecting chamber, which coupling device is provided with a plurality of closable milk feed connections which are each configured for connection of a milk discharge conduit of a milking robot, which milk feed connection is in fluid connection with the collecting chamber and a milk discharge connection for discharging liquids from the collecting chamber and the coupling device.

2. Coupling device as claimed in claim 1, wherein each milk feed connection comprises a remotely controllable, pneumatic or electric valve.

3. Coupling device as claimed in claim 1 or 2, wherein the coupling device also comprises a flushing connection for connection of a flushing device.

4. Coupling device as claimed in any of the foregoing claims, wherein the milk feed connections are arranged on the collecting chamber.

5. Coupling device as claimed in any of the foregoing claims, wherein the milk discharge connection is arranged on the collecting chamber.

6. Coupling device as claimed in any of the foregoing claims, wherein the collecting chamber is elongate.

7. Coupling device as claimed in claim 6, wherein the collecting chamber is tubular.

8. Coupling device as claimed in any of the claims 4-7, wherein the milk feed connections are arranged on the collecting chamber at an angle of 30 to 60 degrees relative to the longitudinal side of the collecting chamber.

9. Coupling device as claimed in any of the claims 4-8, wherein the collecting chamber is assembled from a plurality of segments to be coupled in series to each other, wherein each segment comprises at least one milk feed connection, wherein the first segment forms the milk discharge connection and the final segment forms the flushing connection.

10. System for coupling a plurality of milking robots to one or more milk cooling tanks, comprising
- a coupling device as claimed in any of the foregoing claims;
- at least two controllable three-way valves, wherein each three-way valve comprises an inlet, first and second outlets and is configured to bring about a fluid connection between the inlet and one of the outlets, and to block the fluid connection between the inlet and the outlets, wherein the first outlet of each three-way valve is configured for connection to one of the milk cooling tanks.

11. System as claimed in claim 10, comprising a coupling device as claimed in claims 3-9, wherein the system further comprises a controllable flushing device provided with a flushing container with flushing liquid, wherein the flushing device has a flushing outlet with which flushing liquid is dischargeable from the flushing container, and at least one flushing return inlet with which flushing liquid can be returned to the flushing container, which flushing outlet is connected to the flushing connection of the coupling device in order to flush the coupling device, wherein the coupling connection preferably comprises a sterile remotely controllable, pneumatic or electric non-return valve.

12. System as claimed in claim 11, wherein the three-way valves are connected in series to each other, wherein the second outlet of a three-way valve, except for the final one in the series, is in fluid connection with the inlet of a subsequent three-way valve, the second outlet of the final three-way valve is in fluid connection with a first flushing return inlet of the flushing device, the inlet of the first three-way valve is in fluid connection with the milk discharge connection of the coupling device, the flushing connection of the coupling device is in fluid connection with the flushing outlet of the flushing device.

13. System as claimed in claim 11 or 12, wherein the fluid connection between the second outlet of a three-way valve and the inlet of a subsequent three-way valve and the fluid connection between the second outlet of the final three-wave valve and the flushing return inlet are provided with drain valves.

14. System as claimed in claim 11, wherein the milk discharge connection of the coupling device is in fluid connection with the inlet of a multi-way valve comprising an inlet and a plurality of outlets, and which multi-way valve is configured to bring about a fluid connection between the inlet and one of the outlets and to block the fluid connection between the inlet and the outlets, each of the outlets of the multi-way valve is in fluid connection with the inlet of one of the three-way valves, the second outlet of each three-way valve is in fluid connection with one of the flushing return inlets of the flushing device and the flushing outlet of the flushing device is in fluid connection with the flushing connection of the coupling device.

15. System as claimed in claim 14, wherein the fluid connection between the second outlet of each three-way valve and one of the flushing return inlets of the flushing device is provided with a drain valve.

16. System as claimed in any of the claims 12-13, wherein the system is provided with a first control device configured to place the system in a plurality of operating positions,
wherein in a first operating position:
- the flushing device is switched off;
- one or more milk feed connections of the coupling device are opened;
- the flushing connection of the coupling device is closed;
- the drain valves are closed;
- one of the three-way valves is actuated such that a fluid connection is brought about between the inlet and the first outlet of the respective three-way valve;
- the other three-way valves are actuated such that the fluid connection between the inlet and the outlets is blocked;
wherein in a second operating position:
- the flushing device is switched on;
- the flushing connection of the coupling device is opened;
- the milk feed connections of the coupling device are closed;
- a successive series of three-way valves is actuated such that a fluid connection is brought about between the inlet and the second inlet;
- the three-way valve following said series of three-way valves is actuated such that the fluid connection between the inlet and the second inlet is blocked;
- all drain valves are closed except the drain valve following the three-way valve following said series of three-way valves;
wherein in a third operating position:
- the flushing device is switched on;
- the flushing connection of the coupling device is opened;
- the milk feed connections of the coupling device are closed;
- the three-way valves are actuated such that a fluid connection is brought about between the inlet and the second inlet;
- the drain valves are closed.

17. System as claimed in any of the claims 14-15, wherein the system is provided with a second control device configured to place the system in a plurality of operating positions, wherein in each operating position the multi-way valve is actuated such that a fluid connection is brought about between the inlet and one of the outlets of the multi-way valve,
wherein in a first operating position:
- the flushing device is switched off;
- one or more milk feed connections of the coupling device are opened;
- the flushing connection of the coupling device is closed;
- the drain valves are closed;
- the multi-way valve is actuated such that a fluid connection is brought about between the inlet of the multi-way valve and the inlet of one of the three-way valves;
- the respective three-way valve is actuated such that a fluid connection is brought about between the inlet and the first outlet thereof;
wherein in a second operating position:
- the flushing device is switched on;
- the flushing connection of the coupling device is opened;
- the milk feed connections of the coupling device are closed;
- the multi-way valve is actuated such that a fluid connection is brought about between the inlet of the multi-way valve and the inlet of one of the three-way valves;
- the respective three-way valve is actuated such that a fluid connection is brought about between the inlet and the second outlet thereof;
- the drain valve in the fluid connection between the second outlet of the respective three-way valve and one of the flushing inlets of the flushing device is opened;
wherein in a third operating position:
- the flushing device is switched on;
- the flushing connection of the coupling device is opened;
- the milk feed connections of the coupling device are closed;
- the three-way valves are closed;
- the multi-way valve is actuated such that a fluid connection is brought about between the inlet of the multi-way valve and the inlet of one of the three-way valves;
- the respective three-way valve is actuated such that a fluid connection is brought about between the inlet and the second outlet thereof;
- the drain valve in the fluid connection between the second outlet of the respective three-way valve and one of the flushing inlets of the flushing device is closed.
